# EUROPÄISCHE PATENTANMELDUNG

(11) **EP 1 842 458 A2**
(43) Veröffentlichungstag der Anmeldung: **10.10.2007**
(21) Anmeldenummer: 07004726.1
(22) Anmeldetag: 08.03.2007
(51) Int. Cl.: A47C 27/14, B60N 2/70

(54) **Polsternder Schaumstoffkörper, insbesondere für Kraftfahrzeugsitze**

(30) Priorität: 04.04.2006 DE 102006016107
(71) Anmelder: Car Trim, 08529 Plauen (DE)
(72) Erfinder: Biermann, Ernst Kurt, 08547 Plauen OT Jößnitz (DE)
(74) Vertreter: Haft, von Puttkamer, Berngruber

(57) **Zusammenfassung**

Die Erfindung betrifft einen polsternden Schaumstoffkörper (1) mit einem einen Hohlraum bildenden Strukturkörper (2), der in das Material des Schaumstoffkörpers (1) zumindest teilweise eingebettet ist.

## Beschreibung

Die vorliegende Erfindung betrifft einen polsternden Schaumstoffkörper, insbesondere für Fahrzeugsitze, nach dem Oberbegriff des Patentanspruches 1.

Im Zusammenhang mit polsternden Schaumstoffkörpern ist es bekannt, zur Gewichtsersparung derselben in das Schaumstoffmaterial flexible, aufblasbare Hüllen, z.B. ballonartige Kissen, einzubringen, die in ihrem Bereich das Schaumstoffmaterial verdrängen und Hohlräume bilden. Ein Problem derartiger aufblasbarer Kissen besteht darin, dass sie relativ leicht durch spitze Gegenstände verletzbar sind, sodass sie in sich zusammenfallen, wobei der Schaumstoffkörper in diesem Bereich seine tragende und polsternde Funktion verliert.

Die Aufgabe der vorliegenden Erfindung besteht darin, einen leichtgewichtigen und zudem stabilen Schaumstoffkörper zu schaffen.

Diese Aufgabe wird durch einen polsternden Schaumstoffkörper mit den Merkmalen des Patentanspruches 1 gelöst.

Der wesentliche Vorteil besteht darin, dass der erfindungsgemäße polsternde Schaumstoffkörper als integrativen Bestandteil einen festen, flexiblen und stabilen, einen Hohlraum bildenden Strukturkörper, insbesondere in der Form eines Abstandsgewirkes, aufweist. Dadurch wird im Schaumstoffkörper im Bereich des festen Strukturkörpers Schaumstoffmaterial eingespart. Der Schaumstoffkörper weist daher vorteilhafterweise ein kleineres Gewicht auf. Im Brandfalle wird daher die Rauchentwicklung wesentlich reduziert. Da er weniger Schaumstoffmaterial umfasst, wird auch die Toxizität des vorliegenden Schaumstoffkörpers, die von der beim Verbrennen des Schaumstoffmaterials entstehenden Emission abhängt, erheblich reduziert.

Ein weiterer wesentlicher Vorteil des erfindungsgemäßen Schaumstoffkörpers besteht darin, dass er sehr atmungsaktiv ist, wobei bis in das Volumen des hohlen Strukturkörpers hinein wegen der Großporigkeit des Schaumstoffes und insbesondere auch durch in das Schaumstoffmaterial eingebrachte Bohrungen oder Kanäle ein Luftaustausch möglich ist. Da der Strukturkörper elastisch ist und bei einer Belastung nachgibt, entsteht ein Pumpeffekt, der dafür sorgt, dass der gesamte Schaumstoffkörper und der Strukturkörper aktiv von Frischluft durchströmt werden.

Besonders vorteilhaft sind die vorliegenden Schaumstoffkörper im Zusammenhang mit Fahrzeugsitzen anwendbar, wobei der Strukturkörper im Bereich der mittleren Bereiche der Sitzflächen von Fahrzeugsitzen und/oder der mittleren Bereiche der Rückenlehnen von Fahrzeugsitzen angeordnet sind. Insbesondere spielt dies in Flugzeugen bei lange dauernden Interkontinentalflügen eine große Rolle.

Vorteilhafte Ausgestaltungen der Erfindung gehen aus den Unteransprüchen hervor.

Im Folgenden werden die Erfindung und deren Ausgestaltungen im Zusammenhang mit den Figuren erläutert. Es zeigen:
Figur 1 in schematischer Darstellung einen Schnitt durch einen erfindungsgemäßen Schaumstoffkörper;
Figur 2 eine vergrößerte Darstellung zur Verdeutlichung der Einbettung des Strukturkörpers im Schaumstoffmaterial des Schaumstoffkörpers;
Figuren 3 bis 5 bevorzugte Ausgestaltungen des erfindungsgemäßen Schaumstoffkörpers; und
Figur 6 die Art der Verwendung des erfindungsgemäßen Schaumstoffkörpers bei einem Fahrzeugsitz.

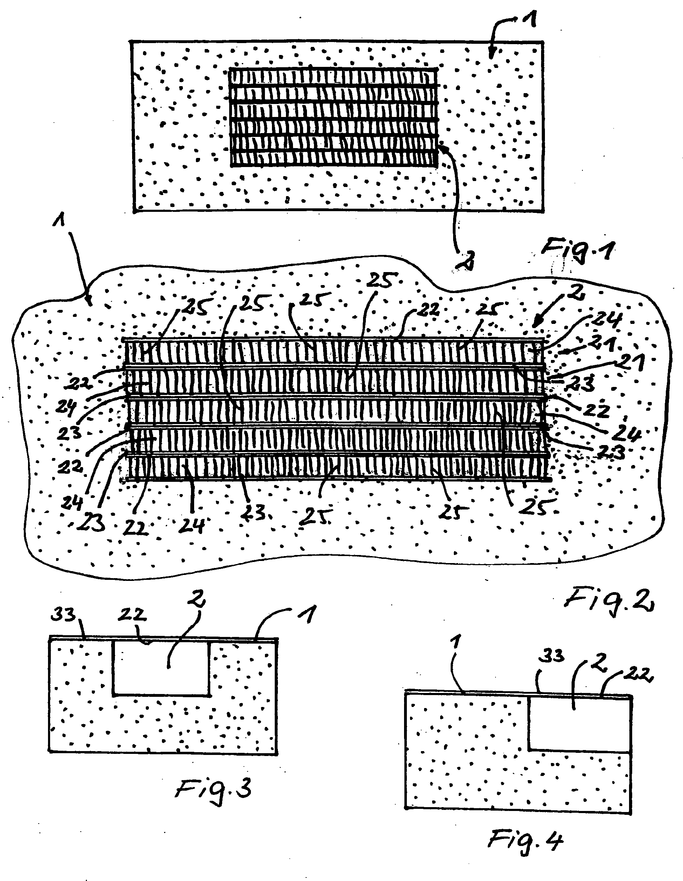

In der Figur 1 ist ein polsternder Schaumstoffkörper, der beispielsweise aus einem grobporigen Schaumstoff besteht, mit 1 bezeichnet. In den Schaumstoffkörper 1 ist, im Falle der Figur 1 allseitig umschlossen, ein in sich flexibler hohler Strukturkörper 2 eingebettet, der beispielsweise mehrere Lagen von Abstandsgewirken umfasst, wie dies die Figur 2 deutlicher zeigt.

Die einzelnen Abstandsgewirke 21 des Strukturkörpers 2 bestehen jeweils aus einer oberen Schicht 22, einer unteren Schicht 23 und einer dazwischen liegenden Abstandsschicht 24, die in an sich bekannter Weise durch einzelne, mit der oberen Schicht 22 und der unteren Schicht 23 verbundene stabförmige Teilchen 25 gebildet wird, die senkrecht zu den Flächen der oberen Schicht 22 und der unteren Schicht 23 verlaufen und diese flexibel auf Abstand halten. In dem mehrlagigen Strukturkörper 2 ist jeweils eine untere Schicht 23 eines Abstandsgewirkes 21 mit der oberen Schicht 22 eines darunter liegenden Abstandsgewirkes 21 fest und flächig verbunden, vorzugsweise teilweise verklebt. Da die oberen Schichten 22 und die unteren Schichten 23 jeweils in ihrer Fläche Aussparungen aufweisen und daher luftdurchlässig sind, ist der gesamte Strukturkörper 2 sowohl in der Richtung senkrecht zu den Flächen der oberen und unteren Schichten 22, 23 als auch parallel zu diesen Flächen luftdurchlässig und atmungsaktiv.

Da der gesamte Strukturkörper 2 bei der Herstellung des Schaumstoffkörpers 1 in das Schaumstoffmaterial desselben eingebettet wird, wird er fest mit dem Schaumstoffkörper 1 verbunden. Der gesamte Strukturkörper 2 wird dabei beim Einbetten von dem Schaumstoffmaterial umgossen und das Schaumstoffmaterial härtet dann aus.

Beispielsweise bestehen die Abstandsgewirke insgesamt aus einem Polyethylenmaterial. Als Schaumstoffmaterial kann ein Polyurethan-Schaumstoff zur Anwendung gelangen.

Gemäß Figur 3 ist es denkbar, den Strukturkörper 2 so im Schaumstoffkörper 1 anzuordnen, dass seine obere Schicht 22 etwa in der oberen Fläche des Schaumstoffkörpers 1 liegt.

Die Figur 4 zeigt eine Ausführungsform des Schaumstoffkörpers 1, bei dem der Strukturkörper 2 so angeordnet ist, dass er sowohl mit einer oberen Schicht 22 in der oberen Fläche des Schaumstoffkörpers 1 als auch mit einer Seitenfläche an einer Seitenfläche des Schaumstoffkörpers 1 freiliegt. Auch ist ein Freiliegen nur an einer Seitenfläche des Schaumstoffkörpers 1 denkbar.

Die obere Schicht des Schaumstoffkörpers 1 und die obere Schicht 22 des Strukturkörpers 2 können mit einem luftdurchlässigen Bezugsstoff 33 überzogen sein.

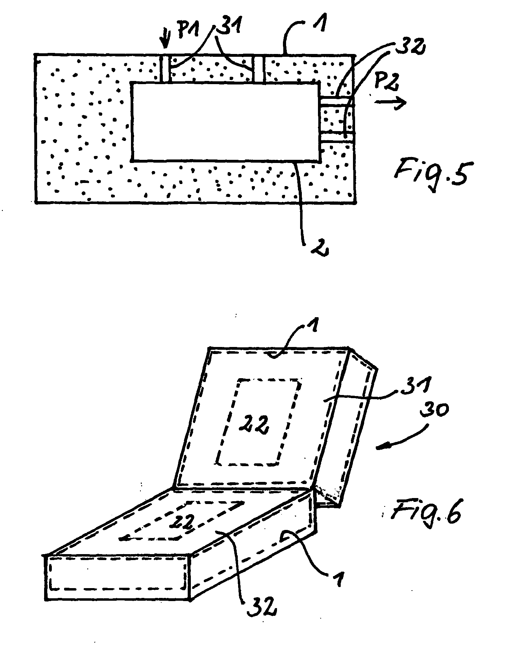

Gemäß Figur 5 können insbesondere dann, wenn der Strukturkörper 2 vollständig in den Schaumstoffkörper 1 eingebettet ist und von dessen Schaumstoffmaterial allseitig umschlossen wird, von den Außenflächen des Schaumstoffkörpers 1 her in diesen Kanäle 31, 32 eingebracht werden, die zum Strukturkörper 1 verlaufen und insbesondere bei einer Druckbelastung des Schaumstoffkörpers 1 in Richtung der Pfeile P1, P2 Strömungen bewirken, die auf einen Pumpeffekt zurückzuführen sind. Beispielsweise wird bei der Belastung des Schaumstoffkörpers 1 von oben her Luft durch die Kanäle 31 nach unten in den Strukturkörper 1 hineingedrückt und von diesem seitlich durch die Kanäle 32 nach außen gepresst. Bei der Entlastung des Schaumstoffkörpers 1 erfolgt die Strömung in der umgekehrten Richtung.

Es wird darauf hingewiesen, dass der Strukturkörper 2 nicht auf die erläuterte Ausführungsform mit den Abstandsgewirken beschränkt ist. Beispielsweise sind auch flexible, hohlräumige Strukturkörper denkbar, die aus Geweben oder Gestricken bestehen, die in beliebiger Weise die obere und die untere Schicht des Strukturkörpers 2 voneinander auf Abstand halten und flexibel sind. Auch sind Strukturkörper denkbar, die wie bei Matratzen Sprungfedern aufweisen, um die oberen und unteren Schichten voneinander auf Abstand zu halten. Ferner kann der Strukturkörper auch durch ein einziges Abstandsgewirke 2 gebildet sein, das so dimensioniert ist, dass ein vorgegebener, relativ großer Abstand der Schichten 22 und 23 erreicht wird. Eine weitere Alternative besteht darin, den hohlen Strukturkörper 2 durch einen flexiblen Kunststoff-Schaumblock oder durch einen flexiblen Kunststoff-Faserblock zu bilden. Dabei weist der Block jeweils eine vorbestimmte Stabilität, Festigkeit und Luftdurchlässigkeit auf. Als Kunststoffmaterialien für den Schaum oder für die Fasern eignen sich beispielsweise Polyethylen, Polyamid oder Polyester.

Im Folgenden wird im Zusammenhang mit der Figur 6 die Anwendung des vorliegenden Schaumstoffkörpers 1 im Zusammenhang mit einem Fahrzeugsitz, insbesondere einem Flugzeugsitz, näher erläutert. Bei Flugzeugsitzen spielen nämlich die eingangs genannten Vorteile der vorliegenden Erfindung (geringes Gewicht des Polsterkörpers, kleine Brennbarkeit und weniger Rauchentwicklung, gute Belüftungseigenschaften, kleinere Toxizität) eine besonders große Rolle. Wie dies schematisch dargestellt ist, befindet sich in einem Fahrzeugsitz 30 in den mittleren Bereichen des Sitzteiles 32 und/oder des Rückenlehnenteiles 31 unter einem Bezugsstoff die vorliegenden polsternden Schaumstoffkörper 1, wobei die Strukturkörper so in das Schaumstoffmaterial der Schaumstoffkörper 1 eingebracht sind, dass sie sich in bzw. unter oder hinter den mittleren Bereichen der Sitzfläche des Sitzteiles 32 bzw. der Rückenfläche des Rückenlehnenteiles 31 befinden, um dort eine besonders gute Belüftung zu ermöglichen.

Es wird darauf hingewiesen, dass der vorliegende Schaumstoffkörper auch in anderer Weise, z.B. im Zusammenhang mit Möbeln, Bekleidungsstücken etc., anwendbar ist.

## Patentansprüche

1. Polsternder Schaumstoffkörper mit einem einen Hohlraum bildenden Strukturkörper (2), **dadurch gekennzeichnet, dass** der hohle Strukturkörper (2) in das Material des Schaumstoffkörpers (1) zumindest teilweise eingebettet ist.

2. Schaumstoffkörper nach Anspruch 1, **dadurch gekennzeichnet, dass** der Strukturkörper (2) vollständig in das Schaumstoffmaterial des Schaumstoffkörpers (1) eingebettet ist.

3. Schaumstoffkörper nach Anspruch 1, **dadurch gekennzeichnet, dass** der Strukturkörper (2) derart in das Material des Schaumstoffkörpers (1) eingebettet ist, dass sich eine Fläche des Strukturkörpers (1) in einer Oberfläche des Schaumstoffkörpers (1) befindet.

4. Schaumstoffkörper nach Anspruch 1 oder 3, **dadurch gekennzeichnet, dass** der Strukturkörper (2) so in das Material des Schaumstoffkörpers (1) eingebettet ist, dass wenigstens eine seiner Seitenflächen in einer Ebene einer Seitenfläche des Schaumstoffkörpers (1) angeordnet ist.

5. Schaumstoffkörper nach einem der Ansprüche 1 bis 4, **dadurch gekennzeichnet, dass** zumindest eine seiner Flächen mit einem Bezugsstoff (33) bedeckt ist.

6. Schaumstoffkörper nach einem der Ansprüche 1 bis 5, **dadurch gekennzeichnet, dass** der Strukturkörper (2) eine obere Schicht (22) und eine untere Schicht (23) umfasst, die durch ein Gewirke, ein Gewebe oder ein Gestricke oder durch Sprungfedern auf Abstand voneinander gehalten werden.

7. Schaumstoffkörper nach einem der Ansprüche 1 bis 5, **dadurch gekennzeichnet, dass** der Strukturkörper (1) wenigstens ein Abstandsgewirke (21) mit einer oberen Schicht (22) und einer unteren Schicht (23) umfasst, wobei die obere Schicht (22) und untere Schicht (23) durch Abstandsteilchen (25) voneinander auf Abstand gehalten werden.

8. Schaumstoffkörper nach Anspruch 7, **dadurch gekennzeichnet, dass** der Strukturkörper (1) aus mehreren übereinander angeordneten Abstandsgewirken (21) besteht, wobei jeweils eine untere Schicht (23) eines Abstandsgewirkes (21) mit einer oberen Schicht (22) eines darunter befindlichen weiteren Abstandsgewirkes (21) verbunden ist.

9. Schaumstoffkörper nach Anspruch 8, **dadurch gekennzeichnet, dass** die untere Schicht (23) des einen Abstandsgewirkes (21) mit der oberen Schicht (22) des darunter befindlichen weiteren Abstandsgewirkes (21) zumindest teilweise verklebt ist.

10. Schaumstoffkörper nach einem der Ansprüche 1 bis 9, **dadurch gekennzeichnet, dass** das Schaumstoffmaterial ein Polyurethan-Schaumstoff ist.

11. Schaumstoffkörper nach einem der Ansprüche 1 bis 10, **dadurch gekennzeichnet, dass** das Abstandsgewirke aus Polyethylen besteht.

12. Schaumstoffkörper nach einem der Ansprüche 1 bis 10, **dadurch gekennzeichnet, dass** der Strukturkörper (2) ein Kunststoff-Schaumblock oder ein Kunststoff-Faserblock ist.

13. Schaumstoffkörper nach Anspruch 12, **dadurch gekennzeichnet, dass** der Schaum oder die Fasern aus Polyethylen, Polyamid oder Polyester bestehen.

14. Schaumstoffkörper nach einem der Ansprüche 1 bis 13, **dadurch gekennzeichnet, dass** in dem Schaumstoffkörper (1) Kanäle (31, 32) vorgesehen sind, die eine Verbindung zwischen der Außenseite des Schaumstoffmaterials und dem Strukturkörper (2) herstellen.

15. Schaumstoffkörper nach einem der Anspruch 14, **dadurch gekennzeichnet, dass** Kanäle (31, 32) zu unterschiedlichen Seiten des Strukturkörpers (2) verlaufen.

16. Fahrzeugsitz, insbesondere Flugzeugsitz, mit einem Sitzteil (32) und ggf. einem Rückenlehnenteil (31), **dadurch gekennzeichnet, dass** ein Schaumstoffkörper (1) so in das Sitzteil (31) und/oder in das Rückenlehnenteil (32) eingebracht ist, dass sich der Strukturkörper (2) in oder unter dem mittleren Bereich der Sitzfläche des Sitzteiles (31) bzw. in oder hinter dem mittleren Bereich der Rückenfläche des Rückenlehnenteiles (31) befindet.
